# EUROPÄISCHE PATENTANMELDUNG

(11) **EP 0 724 206 A2**
(43) Veröffentlichungstag der Anmeldung: **31.07.1996**
(21) Anmeldenummer: 95115299.0
(22) Anmeldetag: 28.09.1995
(51) Int. Cl.: G05D 16/06

(54) **Druckregelventil**

(30) Priorität: 19.01.1995 DE 19501447
(71) Anmelder: ROBERT BOSCH GMBH, 70442 Stuttgart (DE)
(72) Erfinder: Huhnen, Gerald, Dipl.-Ing. (BA), D-71522 Backnang (DE)

(57) **Zusammenfassung**

Die Erfindung betrifft ein Druckregelventil, insbesondere zum Einstellen eines Unterdrucks in einem Kurbelgehäuse eines Kraftfahrzeuges, mit einem mit Unterdruck beaufschlagbaren Anschluß und einen mit einem Druckraum verbindbaren Anschluß und einem mittels einer Regelmembran betätigbaren Schließkörper, der einen Ventilsitz gegen die Kraft eines elastischen Elementes verschließt.

Es ist vorgesehen, daß der Regelmembran (78) ein Druckausgleichsglied für den Unterdruck (P_{U}) zugeordnet ist.

## Beschreibung

Die Erfindung betrifft ein Druckregelventil, insbesondere zum Einstellen eines Unterdrucks in einem Kurbelgehäuse eines Kraftfahrzeuges, nach dem Oberbegriff des Anspruchs 1.

### Stand der Technik

Druckregelventile der gattungsgemäßen Art sind bekannt. Diese werden beispielsweise dazu eingesetzt, in einem Kurbelgehäuse eines Kraftfahrzeuges einen Unterdruck einzustellen/einzuregeln. Dieser Unterdruck ist notwendig, da während des bestimmungsgemäßen Gebrauchs des Kurbelgehäuses aufgrund der sich innerhalb eines Zylinderblocks bewegenden Kolben eine Leckage zwischen dem Kolbenring und der Zylinderwand einstellt. Diese Leckage führt zu einem Druckaufbau mit einem Kraftstoff-Luftgemisch innerhalb des Kurbelgehäuses, der abgebaut werden muß. Damit dieser sich aufbauende Druck nicht ins Freie entweichen kann, ist es bekannt, das Kurbelgehäuse mit einem Unterdruck zu beaufschlagen, mittels dem das in das Kurbelgehäuse eintretende Kraftstoff-Luftgemisch abgesaugt und dem Verbrennungsprozeß der Verbrennungskraftmaschine wieder zugeführt werden kann. Die Druckregelventile besitzen hierzu einen mit Unterdruck beaufschlagbaren Anschluß und einen mit dem Kurbelgehäuse als Druckraum verbindbaren Anschluß, wobei ein mittels einer Regelmembran betätigbarer Schließkörper den mit Unterdruck beaufschlagbaren Anschluß und den mit dem Druckraum verbindbaren Anschluß trennt beziehungsweise verbindet. Die Regelmembran ist so ausgelegt, daß diese aufgrund eines sich in dem Kurbelgehäuse aufbauenden Druckes öffnet und hiermit einen mit dem Schließkörper zusammenwirkenden Ventilsitz öffnet, so daß der Unterdruck das Kurbelgehäuse evakuieren kann. Nach Evakuierung des Kurbelgehäuses wird der Schließkörper durch den Unterdruck wieder zum Schließen des Ventilsitzes gezwungen. Der Schließkörper wird hierbei gegen die Kraft eines elastischen Elementes bewegt. Damit bei einem relativ hohen anliegenden Unterdruck an dem Druckregelventil der Unterdruck in dem Kurbelgehäuse begrenzt werden kann, muß das elastische Federelement eine derartige große Federkraft besitzen, daß auch bei geringem Unterdruck im Kurbelgehäuse und hohem anliegenden Unterdruck von der Unterdruckquelle ein sicheres Öffnen des Ventilsitzes gewährleistet ist. Diese relativ große Federkraft behindert jedoch wiederum den Schließvorgang des Druckregelventils, da die Federkraft von dem Unterdruck der Unterdruckquelle überwunden werden muß. Hierbei ist nachteilig, daß aufgrund eines relativ langsamen Schließvorgangs ein sich in dem Kurbelgehäuse einstellender Unterdruck zu groß wird, beziehungsweise der sich in dem Kurbelgehäuse einstellende Unterdruck starken Schwankungen unterliegt.

### Vorteile der Erfindung

Das erfindungsgemäße Druckregelventil mit den im Anspruch 1 genannten Merkmalen bietet demgegenüber den Vorteil, daß unabhängig von der Höhe des an dem mit der Unterdruckquelle verbindbaren Anschlusses anliegenden Unterdruck eine konstante Einstellung eines Unterdrucks in einem Druckraum möglich wird. Dadurch, daß der Regelmembran ein Druckausgleichsglied für den Unterdruck zugeordnet ist, muß zum Betätigen der Regelmembran, und damit zum Öffnen des Ventilsitzes, der anliegende beziehungsweise sich einstellende Druck in dem Druckraum nicht durch eine zusätzliche Federkraft eines elastischen Elementes zum Öffnen des Ventilsitzes beziehungsweise Überwinden des Unterdruckes unterstützt werden. Die Federkraft des elastischen Elementes kann nunmehr auf ein Minimum beschränkt bleiben, so daß der Schließvorgang des Druckregelventils mittels des von der Unterdruckquelle anliegenden Unterdruckes wesentlich schneller vonstatten geht. Durch das schnelle Schließen des Druckregelventils kann in dem Druckraum ein sich einstellender Unterdruck sehr genau auf einen möglichst konstanten Wert eingeregelt werden. Durch dieses präzise und schnelle Ausregeln von sich einstellenden Druckschwankungen in dem Druckraum auf einen bestimmten wählbaren Unterdruckwert mit geringer Schwankung ergibt sich für diesen eine kleine Bandbreite. Durch den Einsatz eines geringer dimensionierten, elastischen Elementes ergibt sich neben dem schnelleren Schließvorgang für das Druckregelventil bei Erreichen des gewählten Unterdruckes im Druckraum ein geringeres Gesamtgewicht.

Weitere vorteilhafte Ausgestaltungen der Erfindung ergeben sich aus den in den Unteransprüchen genannten Merkmalen.

### Zeichnung

Die Erfindung wird nachfolgend in einem Ausführungsbeispiel anhand der zugehörigen Zeichnungen näher erläutert. Es zeigen:
- Figur 1: eine Schnittdarstellung durch ein Druckregelventil;
- Figur 2: eine Kennlinie eines erfindungsgemäßen Druckregelventils und
- Figur 3: eine Kennlinie eines Druckregelventils nach dem Stand der Technik.

### Beschreibung des Ausführungsbeispiels

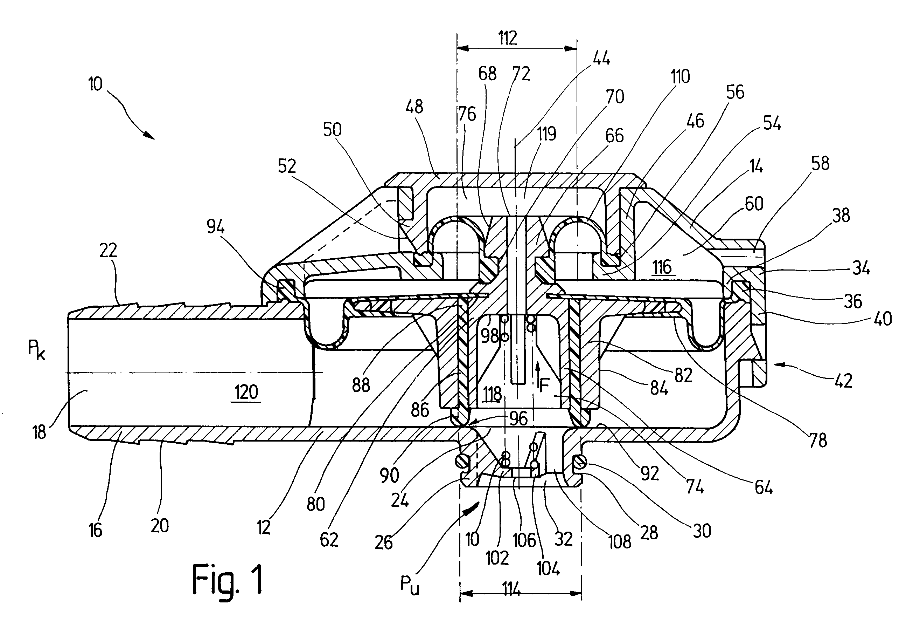

In der Figur 1 ist eine Schnittdarstellung durch ein allgemein mit 10 bezeichnetes Druckregelventil gezeigt. Das Druckregelventil besitzt ein erstes Gehäuseteil 12 und ein zweites Gehäuseteil 14. Die Gehäuseteile 12 und 14 sind in noch zu erläuternder Weise als Unter- beziehungsweise Oberteil des Druckregelventils 10 ausgebildet. Das Gehäuseteil 12 besitzt eine rohrförmige Verlängerung 16, die einen Anschluß 18 für einen Druckraum, beispielsweise ein Kurbelgehäuse einer nicht dargestellten Verbrennungskraftmaschine bildet. Die Verlängerung 16 besitzt auf ihrem Außenumfang 20 eine Riffelung 22, die zum Befestigen einer flexiblen Verbindung, beispielsweise eines Schlauches, geeignet ist. Das Gehäuseteil 12 besitzt weiterhin eine Öffnung 24, die von einem ringförmigen Kragen 26 umgriffen wird. Der Kragen 26 besitzt an seinem Außenumfang eine umlaufende Nut 28, in die ein Dichtungsring 30 einlegbar ist. Der Kragen 26 bildet einen Anschluß 32 für eine zu einer nicht dargestellten Unterdruckquelle, beispielsweise einem Saugrohr eines Kraftfahrzeuges führende Verbindung.

Das Gehäuseteil 14 ist im wesentlichen kreisförmig ausgebildet und besitzt an seinem äußeren, dem Gehäuseteil 12 zugewandtem Rand 34 eine umlaufende Ringnut 36. Die Nut 36 wird hierbei von einem kürzeren Schenkel 38 und einem längeren Schenkel 40 des Randes 34 gebildet. Die Gehäuseteile 12 und 14 sind beispielsweise in hier nicht näher zu erläuternder Weise miteinander durch eine Rastverbindung 42 verbindbar. Das Gehäuseteil 14 weist einen koaxial zu einer Axialen 44 verlaufenden, hülsenförmigen Abschnitt 46 auf, der mittels einer Abdeckkappe 48 verschließbar ist. Die Abdeckkappe 48 besitzt wenigstens eine Rastnase 50, die in eine entsprechende Ausnehmung 52 der Hülse 46 einrastbar ist. Die Hülse 46 besitzt einen ringförmigen Kragen 54, der eine umlaufende Nut 56 ausbildet. Das Gehäuseteil 14 besitzt ferner wenigstens eine Durchgangsöffnung 58, die einen Innenraum 60 mit der das Druckregelventil 10 umgebenden Atmosphäre, also mit Normaldruck, verbindet.

In dem Innenraum 60 des Druckregelventils 10 befindet sich ein Ventilkörper 62. Der Ventilkörper 62 besitzt einen hülsenförmigen Abschnitt 64, der in einen Endabschnitt 66 übergeht. Der Endabschnitt 66 besitzt eine kegelstumpfförmige Mantelfläche 68, die von einer umlaufenden Nut 70 eingeschnürt wird. Der Endabschnitt 66 besitzt ferner eine axiale Durchgangsöffnung 72, die in einem Innenraum 74 des hülsenförmigen Abschnitts 64 mündet. Andererseits mündet die Durchgangsöffnung 72 in einem Innenraum 76 des Gehäuseteils 14, der durch die Abdeckkappe 48 verschließbar ist. Der Ventilkörper 62 wird mittels einer Regelmembran 78 gehalten. Die Regelmembran 78 besitzt eine Profililierung, die einerseits in eine umlaufende Nut 80 des Ventilkörpers 62 eingreift und sich entlang des hülsenförmigen Abschnitts 64 erstreckt. Die Regelmembran 78 ist durch einen Membranteller 82 verstärkt beziehungsweise stabilisiert, der von einer Hülse 84 gebildet wird, die den hülsenförmigen Abschnitt 64 des Ventilkörpers 62 umgreift. Ein zwischen der Hülse 84 und dem hülsenförmigen Abschnitt 64 des Ventilkörpers 62 sich befindender Zwischenraum 86, der beispielsweise von auf einer Kreislinle angeordneten Durchgangsbohrungen durch die Hülse 84 gebildet werden kann, wird von einem axial verlaufenden Abschnitt 88 der Regelmembran 78 ausgefüllt. Der Abschnitt 88 der Regelmembran 78 ist über den Ventilkörper 62 hinaus verlängert und bildet dort einen Wulst 90 aus, der sich an einer Innenfläche 92 des Gehäuseteils 12 abstützt. Andererseits ist die Regelmembran 78 zwischen den Gehäuseteilen 12 und 14 eingeklemmt, indem die Regelmembran einen umlaufenden Abschnitt 94 aufweist, der in der Nut 36 des Gehäuseteils 14 zu liegen kommt und durch den Schenkel 38 arretiert ist. Der Ventilkörper 62 ist somit mittels der Regelmembran 78 in dem Innenraum 60 des Druckregelventils 10 frei aufgehängt. Die Aufhängung des Ventilkörpers 62 ist im Ruhezustand des Druckregelventils so ausgelegt, daß der Wulst 90 die Innenfläche 92 nicht berührt, so daß eine direkte Verbindung zwischen dem Anschluß 32 und dem Anschluß 18 besteht. Der Wulst 90 und die Innenfläche 92 bilden hierbei einen noch zu erläuternden Ventilsitz 96 aus.

An einem Grund 98 des Innenraums 74 des hülsenförmigen Abschnitts 64 stützt sich ein elastisches Federelement 100 ab, das an einem Gegenlager 102 gegengelagert ist. Das Gegenlager 102 wird beispielsweise von in den Anschluß 32 hineinragenden Kragarmen 104 gebildet. Die Kragarme 104 besitzen eine zentrale Durchgangsöffnung 106. Die Kragarme sind so gestaltet, daß eine möglichst geringe Querschnittsverengung für den Anschluß 32 eintritt. In unbelastetem Zustand des elastischen Federelementes 100 befindet sich der Ventilkörper 62 in einer solchen Position, daß der Ventilsitz 96 geöffnet ist. Das elastische Federelement 100 unterstützt somit die Tragwirkung der Regelmembran 78 für das Ventilelement 62. Anstelle des Federelementes 100 kann auch ein - in der Figur 1 nicht dargesteltes - Federelement vorgesehen sein, das die Hülse 84 umgreift.

An den Ventilkörper 62 greift eine Hilfsmembran 110 an, die sich einerseits in der Nut 70 abstützt und andererseits mittels der Abdeckkappe 48 in der Nut 56 des Gehäuseteils 14 festgeklemmt ist. Eine Wirkfläche 112 der Hilfsmembran 110 entspricht einer Fläche 114 des Ventilkörpers 62, die dem Anschluß 32 zugewandt ist.

Durch die Anordnung des Ventilkörpers 62 wird der Innenraum 60 des Druckregelventils 10 in verschiedene Bereiche aufgeteilt, von denen ein erster Bereich 116 mit Normaldruck über die Durchgangsöffnung 58 beaufschlagt ist. Dieser Normaldruck liegt somit - gemäß der in Figur 1 gezeigten Darstellung - an der Oberseite der Regelmembran 78 und der Unterseite der Hilfsmembran 110 an. In einem zweiten Bereich 118 beziehungsweise 119, der von dem Innenraum 74 (118) des Ventilkörpers 62 und dem Innenraum 76 (119) gebildet wird, die über die Durchgangsöffnung 72 miteinander in Verbindung stehen, liegt der an dem Anschluß 32 anliegende Unterdruck an. Ein dritter Bereich 120 weist das an dem Anschluß 18 anliegende Druckniveau auf, das gleichzeitig an der Unterseite der Regelmembran 78 anliegt.

Das in Figur 1 gezeigte Druckregelventil 10 übt folgende Funktion aus:
Beim Betrieb eines mit dem Druckregelventil 10 ausgestatteten Kraftfahrzeuges ist der Anschluß 18 mit dem Kurbelgehäuse der Verbrennungskraftmaschine verbunden. Der Anschluß 32 ist gleichzeitig mit einer Unterdruckquelle, das heißt, bei einem Kraftfahrzeug beispielsweise mit einem Saugrohr, verbunden. Die Unterdruckquelle stellt einen Unterdruck P_{U} zur Verfügung, der zwischen Werten von ca. -100 mbar bis -900 mbar schwanken kann. Da sich das Druckregelventil in seiner Ausgangsstellung befindet, das heißt, der Ventilsitz 96 ist durch die Kraft des Federelementes 100 beziehungsweise dessen elastischer Aufhängung in der Regelmembran 78 leicht geöffnet, wird mittels der Unterdruckquelle der in dem Bereich 114 herrschende Unterdruck P_{U} über den geöffneten Ventilsitz 96 auf den Bereich 120 übertragen. Dieser Unterdruck P_{U} wirkt somit auf das an den Anschluß 18 angeschlossene Kurbelgehäuse, so daß dieses evakuiert wird und sich dort ein bestimmter Unterdruck P_{K} (Kurbelgehäusedruck) einstellt. Der Unterdruck P_{K} in dem Kurbelgehäuse soll auf einen möglichst konstanten, geringfügigen Unterdruck von zum Beispiel -10 bis -15 mbar eingeregelt werden. Der Unterdruck P_{U} liegt gleichzeitig an dem Ventilkörper 62 und zwar an dessen dem Anschluß 32 zugewandten Fläche 114 an. Hierdurch wird der Ventilkörper 62 gegen die Kraft des Federelementes 100 in Richtung des Anschlusses 32 gezogen. Andererseits wirkt an dem Ventilkörper 62 über die Regelmembran 78 der an dessen Unterseite in dem Bereich 120 anliegende Druck P_{K}. Soll nunmehr der Ventilkörper 62 in Richtung des Anschlusses 32 bewegt werden, so daß der von dem Wulst 90 und der Innenfläche 92 gebildete Ventilsitz 96 schließt, so muß die von dem Unterdruck P_{U} ausgehende Kraft größer sein als die Summe der von dem Federelement 100 und dem Druck P_{K} auf den Ventilkörper 62 wirkenden Kräfte. Somit wird klar, daß zum Schließen des Ventilsitzes an sich die von dem Unterdruck P_{U} ausgehende Kraft auf den Ventilkörper 62 größer sein muß als die Kraft des Federelementes 100, der Kraft aufgrund der Steifigkeit der Membran (besonders bei tiefen Temperaturen) plus, beziehungsweise bei einem Unterdruck P_{K} minus, die von dem Druck P_{K} ausgehende Kraft.

Beim Stand der Technik, das heißt, ohne Anordnung der Hilfsmembran 10 und deren noch zu erläuternder Wirkungsweise, mußte auch für den Fall ein sicheres Öffnen des Ventilsitzes 96 gewährleistet sein, daß der an dem Anschluß 32 anliegende Unterdruck P_{U} seinen Maximalwert von beispielsweise -900 mbar aufweist, so daß bei einem angenommenen Querschnitt der Fläche 114, die mit dem Unterdruck P_{U} beaufschlagt wird, mit einem Durchmesser von ca. 10 mm eine Öffnungskraft F von ca. 6 N aufgebracht werden mußte, um den gewünschten Unterdruck P_{K} im Kurbelgehäuse von ca. -15 mbar einregeln zu können, das heißt, beim Erreichen eines höheren Wertes in dem Kurbelgehäuse, beispielsweise durch die bereits erwähnte Leckage, mußte der Ventilsitz 96 öffnen. Dies war nur durch ein relativ starkes Federelement 100 möglich, das der von dem Unterdruck P_{U} ausgehenden Kraft eine entsprechend große Gegenkraft entgegensetzt. Bei offenem Ventilsitz 96 konnte dann durch den Unterdruck P_{U} das Kurbelgehäuse über den Anschluß 18 evakuiert werden, so daß sich dort ein Druckabbau ergibt. Dieser Druckabbau soll, wie bereits erwähnt, auf einen möglichst konstanten, geringfügigen Unterdruck von beispielsweise -15 mbar begrenzt werden. Hierzu ist ein rechtzeitiges Schließen des Ventilsitzes 96 notwendig. Da jedoch nun das Federelement gemäß der Erläuterung eine möglichst große Federkraft aufweisen muß, ist ein Schließen des Ventilsitzes beim Stand der Technik nur relativ langsam möglich, da die relativ große Kraft des Federelementes 100 erst durch die von dem Unterdruck P_{U} ausgehende, auf den Ventilkörper 62 wirkende Kraft überwunden werden muß. Aufgrund dieses langsamen Schließens des Ventilsitzes 96 erfolgt eine Evakuierung des an dem Anschluß 18 angeschlossenen Kurbelgehäuses für einen längeren Zeitraum als eigentlich zur Einstellung des gewünschten Unterdruckes von -15 mbar notwendig wäre, so daß sich dort ein entsprechend höherer Unterdruck P_{K} einstellt. Durch die Regelfunktion des Druckregelventils 10, die quasi eine Zweipunktregelung darstellt, ergab sich eine relativ große Bandbreite der Schwankungen des Druckes P_{K} in dem Kurbelgehäuse.

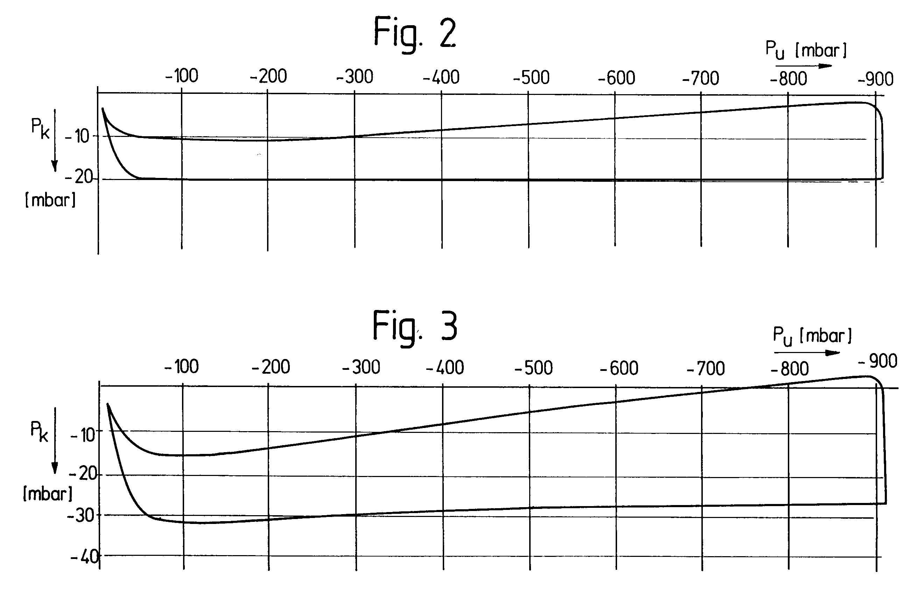

Anhand der Figur 3 ist eine Kennlinie für die Regelung des Druckes P_{K} in dem Kurbelgehäuse gemäß dem Stand der Technik beispielhaft dargestellt. Es wird deutlich, daß bei einem schwankenden Unterdruck P_{U,} der beispielsweise die Werte bis -900 mbar annehmen kann, der Druck P_{K} in Bereichen von ca. 5 mbar bis ca. -30 mbar schwanken kann. Dieser besitzt somit eine relativ große Bandbreite, die dem möglichst konstanten, geringen Unterdruck von beispielsweise -15 mbar im Kurbelgehäuse entgegensteht.

Durch den in Figur 1 gezeigten erfindungsgemäßen Aufbau des Druckregelventils 10 ergibt sich, daß der an dem Anschluß 32 anliegende Unterdruck P_{U} über die Durchgangsöffnung 72 des Ventilkörpers 62 gleichzeitig in dem von dem Innenraum 76 gebildeten Bereich 119 anliegt. Der Unterdruck P_{U} wirkt hier auf die Oberseite der Hilfsmembran 110. Da die Hilfsmembran 110 mit dem Ventilkörper 62 in dessen Nut 70 fest verankert ist, wird eine aufgrund des Unterdruckes P_{U} an der Oberseite der Hilfsmembran 110 erzeugte Kraft auf den Ventilkörper 62 übertragen. Die von dem Unterdruck P_{U} ausgehende Kraft liegt somit an den sich gegenüberliegenden Seiten des Ventilkörpers 62 an, so daß durch eine Wahl der Größe der sich gegenüberliegenden Flächen, die mit dem Unterdruck P_{U} beaufschlagbar sind und eine Kraft auf den Ventilkörper 62 ausüben, eine resultierende Kraft eingestellt wird, die auf den Ventilkörper 62 wirkt. Ist nunmehr die Wirkfläche 112 der Hilfsmembran 110 gleich groß wie die Fläche 114, befindet sich der Ventilkörper 62, bezogen auf die von dem Unterdruck P_{U} ausgehende Kraft in einem Kräftegleichgewicht, das heißt, die resultierende Kraft hat einen Wert von Null. Durch die Durchgangsöffnung 72, die die Bereiche 116 und 118 miteinander verbindet, wird eine Druckwaage für den Ventilkörper 62 geschaffen. Der Ventilkörper 62 kann somit eine Position innerhalb des Druckregelventil 10 einnehmen, die unabhängig von einem an dem Anschluß 32 anliegenden Unterdruck P_{U} und damit unabhängig von einer von dem Unterdruck P_{U} ausgehenden, auf den Ventilkörper 62 wirkenden Kraft ist. Durch eine Variation der Größenverhältnisse der Wirkfläche 112 zu der Fläche 114 kann die resultierende Kraft F in den positiven beziehungsweise negativen Bereich verschoben werden, das heißt, der Ventilkörper 62 wird aufgrund des Unterdruckes P_{U} - gemäß der in Figur 1 gezeigten Darstellung - entweder nach unten oder nach oben gezogen. Zur Wahrung der Unabhängigkeit von dem Unterdruck P_{U} besitzt die resultierende Kraft idealerweise jedoch den Wert Null.

Aufgrund dieser Zusammenhänge wird die den Ventilsitz 96 öffnende beziehungsweise schließende Kraft ausschließlich von einer Kraft des Federelementes 100 und einer von dem Druck P_{K} in dem Bereich 120 ausgehenden Kraft bestimmt. Somit ist es möglich, die von dem Federelement 100 ausgehende Kraft so einzustellen, daß ein in dem Bereich 120 wirkender Druck P_{K} von beispielsweise -15 mbar ausreicht, der an der Unterseite der Regelmembran 78 anliegt, den Ventilkörper 62 entgegen der Kraft des Federelementes 100 zu bewegen, so daß der Ventilsitz 96 schließt. Schon ein geringfügiges Ansteigen des Druckes P_{K} in dem Bereich 120 über den eingestellten Wert führt dazu, daß sich die von dem leicht erhöhten Druck P_{K} ausgehende Kraft mit der Kraft des Federelementes 100 addiert, so daß der Ventilkörper 62 angehoben wird und damit der Ventilsitz 96 öffnet. Über den offenen Ventilsitz 96 liegt somit der an dem Anschluß 32 anliegende Unterdruck P_{U} ebenfalls in dein Bereich 120 an, so daß das an dem Anschluß 18 anliegende Kurbelgehäuse evakuiert werden kann. Sinkt durch diese Evakuierung der in dem Bereich 120 anliegende Druck P_{K} auf den voreingestellten Wert von beispielsweise -15 mbar ab, reicht dies aus, um die Kraft des Federelementes 100 zu überwinden, so daß der Ventilkörper 62 in Richtung des Anschlusses 32 bewegt wird und damit der Ventilsitz 96 wieder schließt.

Dadurch, daß das Federelement 100 keinen großen Kraftbeitrag zum Öffnen des Ventilsitzes 96 mehr leisten muß, kann dieses entsprechend schwächer dimensioniert werden. Hierdurch ergibt der Vorteil, daß der Ventilsitz 96 sehr viel schneller schließt, da nunmehr ein geringfügiger Druckabfall in dem Bereich 120 ausreicht, die Kraft des Federelementes 100 zu überwinden, so daß der Ventilkörper 62 den Ventilsitz 96 schließt. Die Schwankungen des Druckes P_{K} in dem Bereich 120 und damit in dem an dem Anschluß 18 angeschlossenen Kurbelgehäuse, können damit in einem eng begrenzten Bereich eingestellt werden. Anhand der in Figur 2 dargestellten Kennlinie wird das Regelverhalten des Druckregelventils 10 in der in Figur 1 gezeigten Ausführung verdeutlicht. Bei einem angenommenen Unterdruck P_{U}, der wiederum Werte bis -900 mbar annehmen kann, wird in dem Bereich 120 ein Druck P_{K}, der zwischen den Werten von ca. -5 bis ca. -20 mbar schwankt, eingestellt. Gegenüber den in Figur 3 gezeigten, bereits erläuterten Kennlinien, ergibt sich somit eine Verkleinerung der Bandbreite, das heißt der Druckschwankungen in dem Kurbelgehäuse, auf ca. 50 %. Somit ist ein sehr viel genaueres Einstellen eines bestimmten, konstanten, definierten Druckes P_{K} innerhalb des Kurbelgehäuses von beispielsweise -15 mbar möglich.

Die Erfindung beschränkt sich nicht auf das dargestellte Ausführungsbeispiel. insbesondere sind weitere Anordnungen denkbar, die es gestatten, den Ventilkörper 62 beziehungsweise den Ventilsitz 96 so aus zugestalten, daß eine Unterdruck unabhängige Regelung des Druckregelventils 10 erfolgt. Das Regelverhalten des Druckregelventils 10 kann in einfacher Weise durch eine Dimensionierung des Federelementes 100; je stärker dieses dimensioniert ist, umso langsamer schließt der Ventilsitz 96, und eine Abstimmung der Wirkfläche 112 der Regelmembran 10 und der Fläche 114 des Ventilkörpers 62 eingestellt werden. So kann beispielsweise die Unterdruckunabhängigkeit dahingehend ausgelegt werden, daß nur eine äußerst geringe Abhängigkeit von dem Unterdruck P_{U} besteht. Schwankungen des Unterdruckes P_{U} während des bestimmungsgemäßen Einsatzes des Druckregelventils 10 können somit keinen beziehungsweise nur einen äußerst geringen Einfluß auf das Regelverhalten des Druckregelventils 10 ausüben, so daß insgesamt die Einhaltung eines konstanten, möglichst geringfügigen Unterdruckes P_{K} in dem Kurbelgehäuse möglich wird.

## Patentansprüche

1. Druckregelventil, insbesondere zum Einstellen eines Unterdrucks in einem Kurbelgehäuse eines Kraftfahrzeuges, mit einem mit Unterdruck beaufschlagbaren Anschluß und einen mit einem Druckraum verbindbaren Anschluß und einem mittels einer Regelmembran betätigbaren Schließkörper, der einen Ventilsitz gegen die Kraft eines elastischen Elementes verschließt, **dadurch gekennzeichnet**, daß der Regelmembran (78) ein Druckausgleichsglied für den Unterdruck (P_{U}) zugeordnet ist.

2. Druckregelventil nach Anspruch 1, **dadurch gekennzeichnet**, daß das Druckausgleichsglied eine mit dem Unterdruck (P_{U}) beaufschlagbare Hilfsmembran (110) ist.

3. Druckregelventil nach einem der vorhergehenden Ansprüche, **dadurch gekennzeichnet**, daß die Regelmembran (78) und die Hilfsmembran (110) an einem den Schließkörper bildenden Ventilkörper (62) angreifen, wobei die Regelmembran (78) und die Hilfsmembran (110) parallel zueinander angeordnet sind.

4. Druckregelventil nach einem der vorhergehenden Ansprüche, **dadurch gekennzeichnet**, daß der Ventilkörper (62) eine Durchgangsöffnung (72) aufweist, die einen mit dem Unterdruck (P_{U}) beaufschlagbaren Bereich (118) mit einem die Hilfsmembran (110) mit dem Unterdruck (P_{U}) beaufschlagenden Bereich (119) (Innenraum 76) verbindet.

5. Druckregelventil nach einem der vorhergehenden Ansprüche, **dadurch gekennzeichnet**, daß sich der mit dem Unterdruck (P_{U}) beaufschlagbare Bereich (118, 119) auf zueinander entgegengesetzte Seiten des Ventilkörpers (62) erstreckt.

6. Druckregelventil nach einem der vorhergehenden Ansprüche, **dadurch gekennzeichnet**, daß eine mit dem Unterdruck (P_{U}) beaufschlagbare Fläche (114) des Ventilkörpers (62) mit einer Wirkfläche (112) der Hilfsmembran (110) eine Druckwaage für den Ventilkörper (62) bildet.

7. Druckregelventil nach einem der vorhergehenden Ansprüche, **dadurch gekennzeichnet**, daß die Fläche (114) und die Wirkfläche (112) gleich groß sind.

8. Druckregelventil nach einem der vorhergehenden Ansprüche, **dadurch gekennzeichnet**, daß der Ventilkörper (62) von einem hülsenförmigen Abschnitt (64) und einem Endabsohnitt (66) gebildet wird, wobei der hülsenförmige Abschnitt (64) mit seinem Grund (98) dem Anschluß (32) zugewandt ist.

9. Druckregelventil nach einem der vorhergehenden Ansprüche, **dadurch gekennzeichnet**, daß sich an dem Grund (98) des hülsenförmigen Abschnittes (64) das elastische Element (100) einerseits abstützt, das an einem in dem Anschluß (32) angeordneten Gegenlager (102) gegengelagert ist.

10. Druckregelventil nach einem der vorhergehenden Ansprüche, **dadurch gekennzeichnet**, daß innerhalb des hülsenförmigen Abschnittes (64) Führungselemente (Einführhilfen) für das Federelement (100) angeordnet sind.

11. Druckregelventil nach einem der vorhergehenden Ansprüche, **dadurch gekennzeichnet**, daß ein zwischen der Regelmembran (78) und der Hilfsmembran (110) angeordneter Bereich (116) des Druckregelventils (10) über wenigstens eine Durchgangsöffnung (58) mit Normaldruck beaufschlagbar ist.
